# EUROPEAN PATENT APPLICATION

(11) **EP 1 187 437 A2**
(43) Date of publication of application: **13.03.2002**
(21) Application number: 01121611.6
(22) Date of filing: 11.09.2001
(51) Int. Cl.: H04M 1/73, H04M 1/22

(54) **A radio communication terminal having a lighting control mechanism**

(30) Priority: 12.09.2000 JP 2000275886
(71) Applicant: Kabushiki Kaisha Toshiba, Tokyo (JP)
(72) Inventor: Kume, Tetsuhiro, Int. Prop. Div., Minato-ku, Tokyo (JP)
(74) Representative: HOFFMANN - EITLE

(57) **Abstract**

A radio communication terminal including a novel lighting control mechanism for selectively changing a lighting part in the radio communication terminal during a suitable time for a detected operating communication mode.

The lighting part is flexibly changed in consideration of the detected operating communication mode so as to reduce total power consumption of the radio communication terminal. For example, when a moving picture communication mode is detected, the lighting control mechanism controls to light on a display with keeping lighting out for a key operating unit, and if a voice call mode is detected, both the display and the key operating unit is lighted out.

Further the lighting control mechanism can include a brightness control unit for controlling the brightness of the selected lighting suitable for a detected operating communication mode.

## Description

### CROSS REFERENCE TO RELATED APPLICATION

This application claims the benefit of Japanese Patent Application No.P2000-275886, filed on September 12, 2000, the disclosure of which is expressly incorporated herein by reference in its entirety.

### BACKGROUND OF THE INVENTION

### Field of the Invention

The invention relates to a radio communication terminal having different radio communication modes. More particularly, the invention relates to a lighting control mechanism for controlling a flexible lighting a part on the terminal in accordance with an operating radio communication mode.

### Description of the Related Art

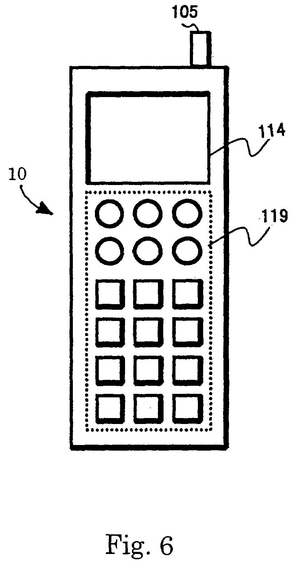

As illustrated in Figure 6, a radio communication terminal 10, such as a mobile telephone, includes a display 114, such as a liquid crystal display (LCD) and a key operation unit 119 having a plurality of function keys and ten-keys. Further, the mobile telephone 10 includes a lighting control mechanism (not shown) for back lighting the LCD display 114 and the plurality of keys in the key operating unit 119 when the mobile telephone 10 transmits and receives radio data to and from a base station through an antenna 105.

Usually, a conventional lighting control mechanism performs lighting on and off operations for collectively back lighting both the display 114 and the key operation unit 119at the same in a mobile telephone. Thus, if a mobile telephone 10 receives radio data from a base station though the antenna 105 or detects data input through the key operation unit 119, the lighting control mechanism sets lighting on both the display 114 and the key operation unit 119 simultaneously.

On the contrary, it is requisite for a mobile telephone to save power consumption. In order to save of the power consumption, the conventional lighting control mechanism limits the lighting-on time for the collective back lighting both the display 114 and the key operation unit 119 in a predetermined short time. Since the lighting control mechanism lights off both the display 114 and the key operation unit 119 simultaneously, even though it is unsuitable timing for a user when the predetermined short time has passed, the conventional lighting control mechanism would affect serious inconveniences for a user's operations.

In order to improve such inconveniences, another technology for the lighting control mechanism, such as Japanese Laid Open Patent 10-200615 has been proposed. The technology indicates to make lighting off both the display and the key operation during more suitable timing with varying the predetermined light-on time in accordance with a status of an operating program. Although the technology proposes to vary the lighting-on time depending to the program, it still has inconveniences for a user since both the display and the key operation unit is still simultaneously lighted on and off.

Recently, it is required to have various functions in a radio-communication terminal, and consequently, much more reduction of the power consumption for the mobile telephone also is required. However, as mentioned above, the conventional light on/off control mechanism for the radio-communication terminal has never considered such inconveniences or the reduction of the power consumption that would appear in accordance with different communication modes for the mobile telephone at all.

### SUMMARY OF THE INVENTION

Therefore, there is a need for providing a radio communication terminal that can avoid the aforementioned inconveniences with also performing reliable reduction of the power consumption. A lighting control mechanism for a radio communication terminal according to the invention solves the aforementioned problems and defects of the conventional lighting control mechanism for a radio communication terminal.

Namely, the object of the present invention is to provide a radio communication terminal having a novel lighting control mechanism that can control each of lighting parts during suitable light-on time in accordance with an operating communication mode so as to adjust to the characteristics of the communication mode.

Another object of the present invention is to provide a novel lighting control mechanism for a radio communication terminal that can separately control the brightness for each of the selected lighting parts so as to adjust to the operations under the operating communication mode.

Further object of the invention is to provide a novel lighting control mechanism for a radio communication terminal that can individually adjust the suitable lighting on and off timings in accordance with the operating communication mode in considering of the reduction of the power consumption.

Still further object of the invention is to provide a novel lighting control mechanism for a radio communication terminal that can light on particular keys in a key operation unit in accordance with an operating communication mode in order to improve an operability for a user.

In order to achieve the above-mentioned objectives, the invention provides an apparatus and method for separately controlling a timing of lighting off the display and the keys in accordance with an operating communication mode. The radio communication terminal having a plurality of communication modes for transmitting and receiving data, comprising: a transmitter-receiver unit for transmitting and receiving data; an input unit for inputting data; a display unit for displaying the received data by the transmitter-receiver unit and the inputted data by the input unit; a lighting unit for lighting the input unit and the display unit, the lighting unit includes a first lighting circuit for lighting the input unit and a second lighting circuit for lighting the display unit; a recognition unit for recognizing an operating communication mode among the plurality of communication modes; and a brightness control unit for controlling the brightness for the respective first and second lighting circuits in accordance with the recognized operating communication mode.

Additional objects and advantages of the invention will be set forth in the description that follows, and in part will be obvious from that description, or may be learned by practicing the present invention. The objects and advantages of the invention may be realized and obtained by means of the instrumentalities and combinations particularly pointed out in the appended claims.

### BRIEF DESCRIPTION OF THE DRAWINGS

A more complete appreciation of the present invention and many of the attendant advantages will be obtained as the same becomes better understood by reference to the following detailed description when considered in connection with the accompanying drawings in which like reference numerals designate identical or corresponding parts throughout the several views.

Figure 1 is a block diagram illustrating components of a radio communication terminal applicable to an apparatus and method for controlling lighting operation according to the invention.

Figure 2 is a block diagram illustrating components of the lighting control mechanism in the radio communication terminal shown in Figure 1.

Figure 3 illustrates an embodiment of a circuit diagram applicable to the lighting control mechanism according to the invention.

Figure 4 is a flowchart of an embodiment of the invention for performing the lighting control consistent with the invention.

Figure 5 illustrates another embodiment of a circuit diagram applicable to the lighting control mechanism according to the invention.

Figure 6 illustrates a mobile phone as an example of a radio communication terminal applicable to the apparatus and method according to the invention..

### DESCRIPTION OF THE PREFERRED EMBODIMENTS

Reference will now be made in detail to the preferred embodiments of the invention, examples of which are illustrated in the accompanying drawings. Wherever possible, the same reference numbers will be used throughout the drawings to refer to the same or like parts.

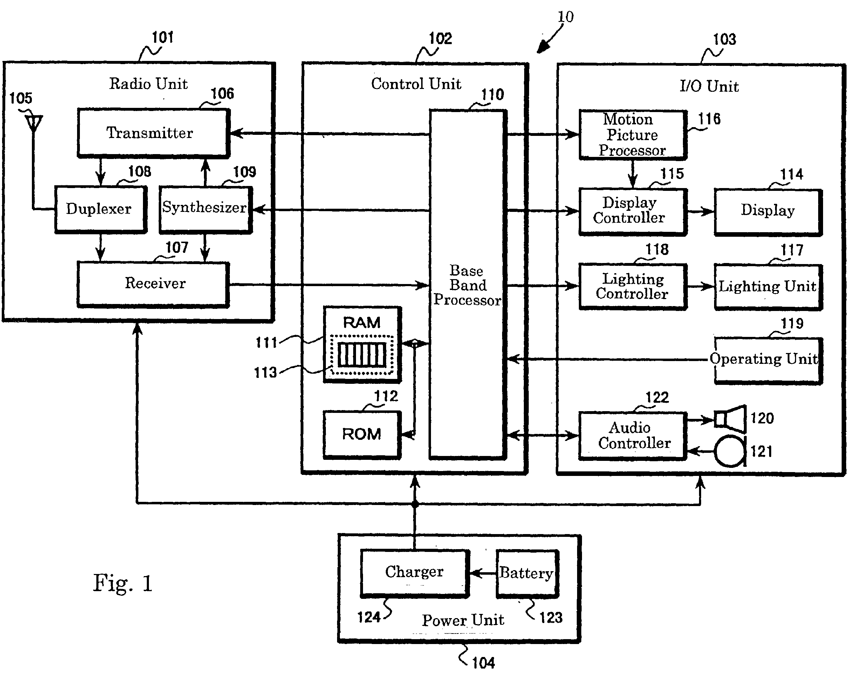

As illustrated in Figure 1, a radio communication terminal 10 consistent with the invention is comprised of a radio unit 101, a control unit 102, an I/O unit 103, and a power supply unit 104. The radio unit 101 includes an antenna 105, a transmitter 1Q6, a receiver 107, a duplexer 108 and a synthesizer 109. The control unit 102 includes a base band processor 110 for controlling whole operations in the radio communication terminal, a random access memory (RAM) 111 as a primary memory, and a read only memory (ROM) 112 for storing various control programs for the operations of the radio communication terminal. The RAM 111 in the radio unit 101 includes a flag area 113.

The I/O unit 103 includes a display 114, such as a LCD, a display controller 115, a moving image processor 116, a lighting part 117, a lighting controller 118, an operating part 119 including a plurality of key pads, a speaker 120, a microphone 121 and an audio controller 122. The power supply unit 104 includes a battery 123 and a battery charger 124. Each of the radio unit 101, the control unit 102 and the I/O unit 103 is supplied power from the power supply unit 104.

The antenna 105 in the radio unit 101 transmits and receives radio signals from and to a base station. The received signals through the antenna 105 are transmitted to the duplexer 108 and the receiver 107 in the radio unit 101 and further transmitted to the base band processor 110 in the control unit 102. On the other hand, when the radio communication terminal 10 transmits signals to the base station, the base band processor 110 in the control unit 102 sends the transmitting signals to the transmitter 106 in the radio unit 101. The transmitter 106 transmits the signals to the duplexer 108 and transmits the data in the air through the antenna 105. Further, the base band processor 110 in the control unit 102 controls the synthesizer 109 in the radio unit 101 so as to exchange communication channels for a transmission time and a reception time of the radio communication terminal 10.

The flag area 113 in the RAM 111 is used for indicating an operation status or non-operation status of a particular program. Thus, each of a plurality of flags stored in the flag area 113 corresponds to a particular operating communication mode of the radio communication terminal 10, such as a voice call mode, a moving picture communication mode, a mailing mode, a browsing mode, or a visual telephone mode, and so on. Thus, the radio communication terminal 10 consistent with the invention can recognize the operating communication mode by storing a plurality of flags corresponded to each of the plurality of communication modes in the PAM 111.

When a particular program is started under a control of the base band processor 110, a particular flag corresponded to the particular program is set in the flag area 113 by the base band processor 110. In case of the finish of the operation of the particular program, the base band processor 110 cancels the flag corresponded to the particular program. Thus, the radio communication terminal 10 according to the invention can memorize a particular operating communication mode by setting and canceling a particular flag in the flag area 113. Of course, it is also possible to provide the flag area 113 in a RAM area in the base band processor 110.

The LCD 114 displays the data received through the radio unit 101 or the data and commands inputted through the key operation unit 119 under a control of the display controller 115. The moving picture processor 116 supplies the moving picture data to the display controller 115 with decoding the received moving picture data of the moving picture experts group phase 4 (MPEG4).

The lighting unit 117 includes a plurality of light emitters, such as a light emitting diode (LED). Some of the light emitters are used as a back lighting for the LCD 117 and the remainder is used for lighting up the key-pads in the key operating unit 117 under controls of the lighting controller 118.

The audio control unit 122 controls to output voices to the speaker 120 and to input voices from the microphone 121. Of course, it is possible to provide a camera in the I/O unit 103 for inputting images. Further, it is also possible to provide a vibrator or a sounder in the I/O unit 103 for signaling reception of communication from the base station.

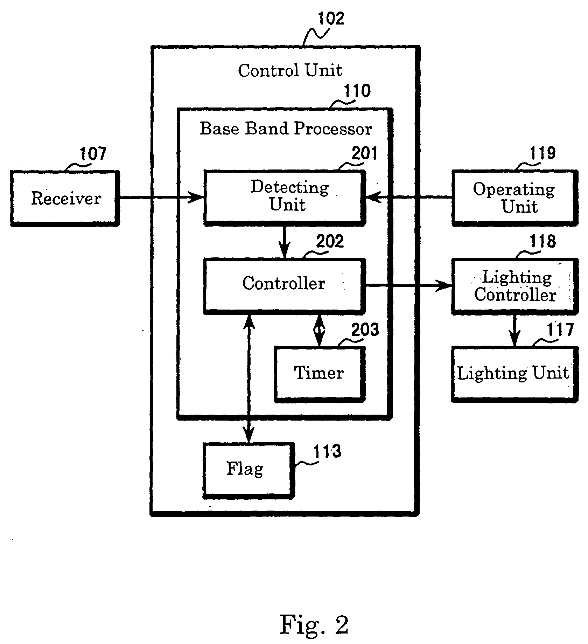

Figure 2 illustrates essential components of the lighting control mechanism for the radio communication terminal consistent with the invention. As illustrated in Figure 2, the base band processor 110 includes a detecting unit 201, a controller 202, and a timer 203. The detecting unit 201 is coupled to the receiver 107 in the radio unit 101 for detecting reception of data from the antenna 105. Further the detecting unit 201 is coupled to the control part 119 in the I/O unit 103 for detecting input operation through the key operation unit 119. The data detected at the detecting unit 201 is transferred to the controller 202. The controller 202 sends a control signal for setting the timer 203 for controlling the lighting controller 118. Thus, the controller 202 sends a lighting control data that is corresponded to the recognized communication mode to the lighting unit 117 with referencing to the flag 113 for recognizing the operating communication mode. Instead of setting the flag in the RAM, of course, it is possible to store a table for indicating relationship between the recognized communication mode and the lighting control data in the ROM 112.

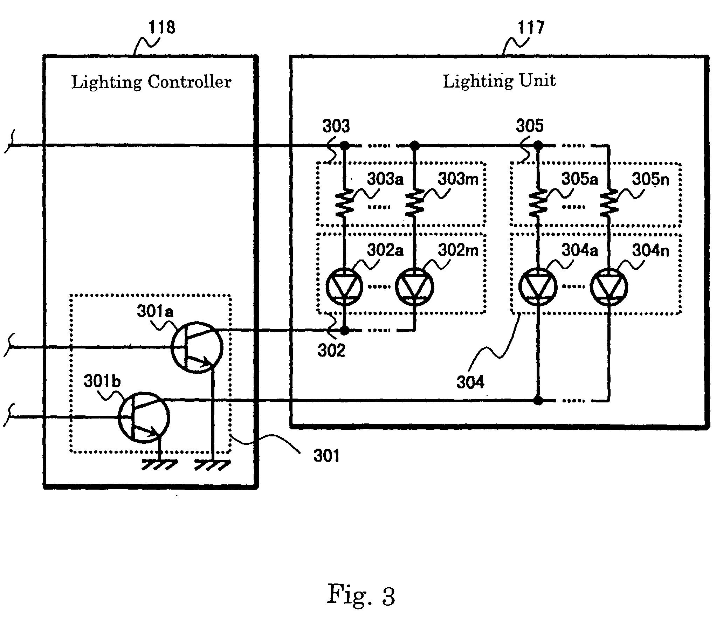

Figure 3 illustrates an example of a circuit of the lighting control mechanism of the radio communication terminal consistent with the invention. The lighting controller 118 includes a first and a second lighting control transistors 301a and 301b for respectively controlling lighting on/off operations of a first and a second groups of a plurality of LEDs 302a-302m, and 304a-304n in the lighting unit 117. The first group of a plurality of LEDs 302a-LED 302m are used for back lighting the display 114. And the second group of a plurality of LEDs 304a-LED 304n is used for lighting the key operation unit 119. The second LED group includes a plurality of that are coupled in a parallel. With corresponding to each of the LEDs, a plurality of current controlling resistors is provided in the lighting part 117. Thus, a first group of current controlling resistors 303a-303m are disposed in a parallel so as to correspond to each of the LEDs in the first LED group, and a second group of current controlling resistors 305a - 305n are disposed in a parallel so as to correspond to each of the LEDs in the second LED group. The respective lighting control transistors 301a and 301b controls to light ON and OFF each of the first group of LEDs 302a-302m for lighting the display 114 and also each of the second group of LEDs 304a-304n for lighting the operating part 119 under control data supplied from the controller 202 in the control unit 102. According to this circuit construction, it becomes possible to control to light on and off the display 114 and the operating part 119, respectively.

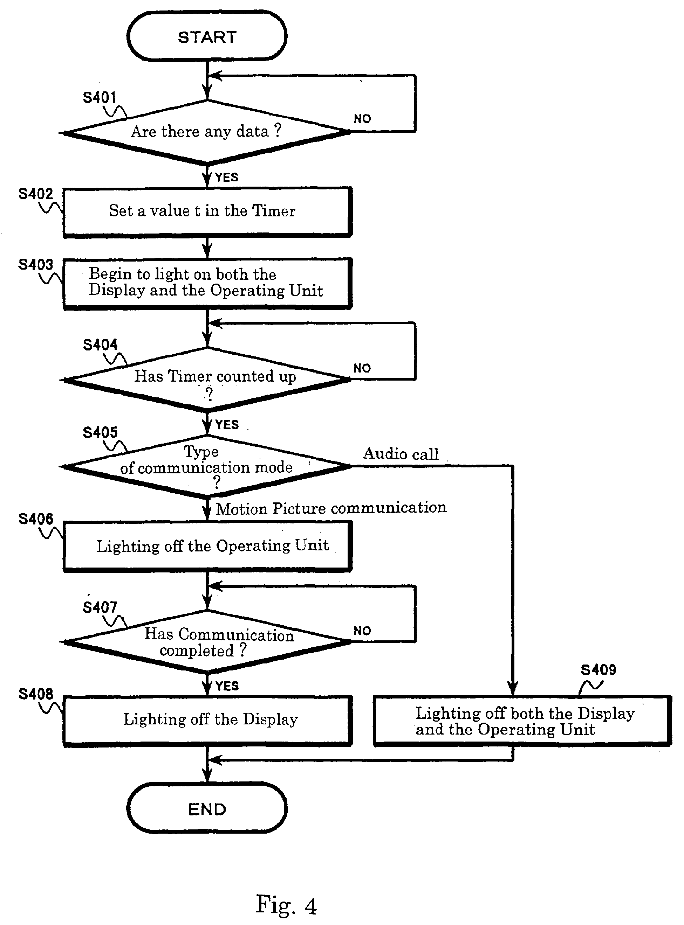

With reference to Figure 4, the lighting control method for the radio communication terminal consistent with the invention would be explained. In this example, the radio communication terminal operates under two communication different modes, e.g., a voice call mode and a moving picture communication mode.

During operation of the radio communication terminal 10, the detector 201 in the base band processor 110 detects whether or not either one of reception data from the receiver 107 or input data operation from the operating control part 119 (step S401). When the detector 201 detects either one of the data, the controller 202 sets up the timer 203 at a predetermined time t (step S402). Coincidentally, the controller 202 sets on the lighting control transistors 301a and 301b so as to light on both of the first and the second LED groups 302a-302m. Thus, both part of the display and the operation part are begun to light on (step S403). The controller 202 maintains the lighting for both parts during the predetermined time t.

When the timer counts up the predetermined time t (step S404), the controller 202 judges the present communication mode by referencing to the flag area 113. Thus, in this example, whether the moving picture communication mode or the voice call mode is judged in accordance with the flag (step S405). If the present communication mode is judged as the moving picture communication mode, the controller 202 keeps the light-on state of the transistor 301a for continuing the lighting for the display 114. Simultaneously, the controller 202 control turns the lighting control transistor 301b off for lighting out the second group of LEDs 304a-304n so as to save the power consumption, since the lighting for the operating part 119 is not necessary during the moving picture communication mode (step S406). When the present communication has finished (step S407), the controller 202 turns off the lighting control transistor 301a for lighting out the first LED group 302a-302m for the display (stepS408).

On the contrary, if the present communication mode is judged as a voice call mode at the step S405, the controller 202 turns off both the lighting control transistors 301a and 301b for lighting out both the first and the second LED groups 302a-302m, 304a- 304n. Thus, both the display 114 and the operational part 119 are lighted out, since no lighting needs during the voice call (stepS409).

In this embodiment, at the step S405, it is judged whether the present communication mode is a voice call mode or a moving picture communication mode, as an example that is needed to light on a display during a time when a user watches the display. Thus, it is also applicable to a mail mode, brauzing mode or a TV communication mode.

Further it is possible to improve the availability of the radio communication terminal by differing the lighting off time in accordance with a communication mode. For example, it is possible to set that a timer value for counting the lighting off time for a voice call mode is a small value and the timer value for counting the lighting off time for a mail communication mode is a large value.

As explained above, an apparatus and method for lighting parts in a communication terminal consistent with the invention can light on both a display and an operation part during a predetermined time when the reception of data or the data input operation begins, since the lighting on both parts is indispensably needed for a user's operation. After lighting on both parts during the predetermined time, the communication mode is judged for determining whether or not the lighting is needed for the communication mode. If the communication mode is not needed lighting a particular part, such as a voice call mode, the lighting off is performed in order to save the power consumption of the hand-held device. Thus, it becomes possible to flexibly reduce the power consumption with maintaining convenience for a user.

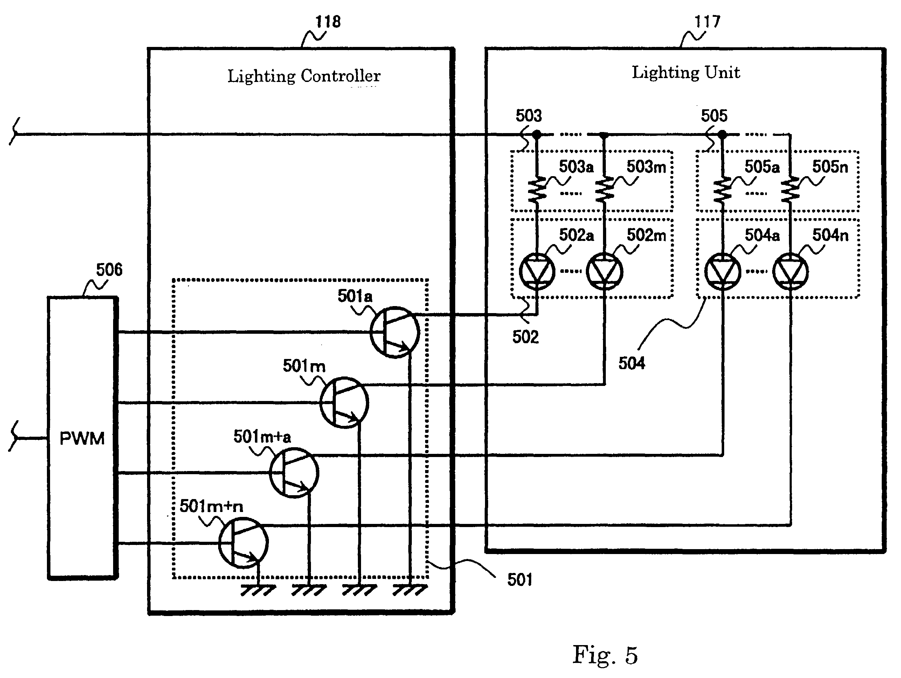

Figure 5 illustrates another embodiment of the lighting control mechanism for a radio communication terminal consistent with the invention. In comparison to the embodiment shown in Figure 3, a lighting control unit 118 includes increased number of control lines through a plurality of lighting control transistors for controlling light on and off of the plurality of LEDs. Thus, the lighting unit 117 includes a number m of LEDs 502a-502m for a display and a number n of LEDs 504a-504n for an input operation part. Consequently, the lighting control unit 118 includes a number m+n of lighting control transistors 501a, 501m, 501m+a, and 501 m+n for controlling lighting on and off each of the LEDs. The lighting unit 117 further includes a number m of current controlling resistors 503a-503m corresponded to each of the LEDs 502a-502m for a display and a number n of current controlling resistors 505a-505n corresponded to each of the LEDs for an input operation part. Thus, each of the LEDs 502a-502m for the display is coupled to each of the lighting control transistors 503a-503m. And each of the LEDs 504a-504n is coupled to each of the 505a-505n. According to this construction, it becomes possible to control lighting on and off for a particular part, for example a particular keys in the input operation unit with accompanying lighting on the display in accordance with a communication mode.

For example, it becomes possible to light on a call end key during the lighting on a display during a moving picture communication mode. It is also possible to light on a record key and a call end key during a voice call mode. Further, if a volume of receiving data is large and a scrolling display data is needed, it is possible to light on a particular key for the scrolling. Thus, it can improve the usability of the communication terminal.

In Figure 5, a pulse width modulator (PWM) 506 is provided between the base band processor 102 and the lighting control unit 118 for controlling brightness of the light emitting elements, such as LEDs, by a pulse driving of them. Thus, the PWM 506 generates a PWM signal based on a control data from the controller 202 in the base band processor 102. The PWM signal is supplied to each of the lighting control transistors 501a, 501m, 501m+a, and 501m+n in order to control the brightness of each lighting of the number m+n of LEDs 502a-502m, and 504a-504n. It is possible to store the relationship between the brightness for a particular lighting part and a communication mode in the ROM 112.

Consequently, it becomes possible to improve the operability of the the communication terminal by increasing or reducing the brightness of the particular part in the communication terminal in accordance with the communication mode.

As explained above, the radio communication terminal consistent with the invention can separately control a plurality of lighting parts in an appropriate timing and brightness in accordance with a communication mode with keeping a power consumption of the handheld radio communication term.

## Claims

**1.** A radio communication terminal operating under a plurality of communication modes, comprising:
a transmitter-receiver unit for transmitting and receiving data;
a key input unit for inputting data;
a display unit for displaying received data through the transmitter-receiver unit and the key input unit;
a lighting unit for independently lighting the key input unit and the display unit,
a recognition unit for detecting an operating communication mode among the plurality of communication modes; and
a control unit for controlling the lighting unit suitable for the detected operating communication mode.

**2.** A radio communication terminal having a plurality of communication modes for transmitting and receiving data, comprising:
a transmitter-receiver unit for transmitting and receiving data;
an input unit for inputting data;
a display unit for displaying the received data by the transmitter-receiver unit and the inputted data by the input unit;
a lighting unit for lighting the input unit and the display unit, the lighting unit includes a first lighting circuit for lighting the input unit and a second lighting circuit for lighting the display unit;
a recognition unit for recognizing an operating communication mode among the plurality of communication modes; and
a brightness control unit for controlling the brightness for the respective first and second lighting circuits in accordance with the recognized operating communication mode.

**2.** The radio communication terminal according to claim 2, wherein:
the input unit includes a plurality of data input areas;
the first lighting circuit includes at least one special circuit for lighting one particular data input area among the plurality of data input areas; and
the brightness control unit controls the brightness of lighting of the one particular data input area in accordance with the recognized operating communication mode.

**4.** The radio communication terminal according to claim 2, wherein:
the plurality of communication modes includes at least a voice call mode for transmitting and receiving voice data;
the brightness control unit lights on both the input unit and the display unit by controlling the respective lighting circuits when data is received through the transmitter-receiver unit data or data inputted through the input unit;
the recognition unit determines whether the operating communication mode is the voice call mod or not after when a predetermined time period has passed;
the brightness control unit lights out both the input unit and the display unit when the recognized operating communication mode is the voice call mode, and the brightness control unit reduces the brightness or lights out the input unit when the recognized operating communication mode is other mode than the voice call mode.

**5.** A radio communication terminal having a plurality of communication modes for transmitting and receiving data, comprising:
an input unit for inputting data, the input unit includes a plurality of data input areas;
a lighting unit for lighting the input unit, the lighting unit includes at least two lighting circuits for lighting a particular area among the plurality of data input areas;
a recognition unit for recognizing an operating communication mode among the plurality of communication modes; and
a brightness control unit for controlling the respective brightness of the lighting of the respective areas in accordance with the recognized operating communication mode.

**6.** An apparatus for separately controlling lighting off a first plurality of light emitting devices for a display unit and a second plurality of light first emitting devices for a key unit in a radio communication terminal, comprising:
a plurality of lighting control transistors for separately controlling lighting the first and second plurality of light emitting devices in the radio communication terminal
a timer for counting a predetermined time for deciding a lighting off of the first or the second plurality of light emitting devices;
a detector for detecting either data received in the radio communication terminal or data inputted from the key unit;
a controller for setting up the timer at the predetermined time when the detector detects either one of the data;
a first mechanism for judging a communication mode when the timer counts up the predetermined time, and
a second mechanism for separately turning off the plurality of the lighting control transistors in accordance with the judged the communication mode.

**7.** Method for separately controlling lighting off a first plurality of light emitting devices for a display unit and a second plurality of light first emitting devices for a key unit in a radio communication terminal, comprising:
a plurality of lighting control transistors for separately controlling lighting the first and second plurality of light emitting devices in the radio communication terminal
a timer for counting a predetermined time for deciding a lighting off of the first or the second plurality of light emitting devices;
a detector for detecting either data received in the radio communication terminal or data inputted from the key unit;
a controller for setting up the timer at the predetermined time when the detector detects either one of the data;
a first mechanism for judging a communication mode when the timer counts up the predetermined time, and
a second mechanism for separately turning off the plurality of the lighting control transistors in accordance with the judged the communication mode.
